(19) Europäisches Patentamt
European Patent Office
Office européen des brevets

(11) **EP 4 583 011 A1**

(12) **EUROPEAN PATENT APPLICATION**

(43) Date of publication:
**09.07.2025 Bulletin 2025/28**

(21) Application number: 24305017.6

(22) Date of filing: **05.01.2024**

(51) International Patent Classification (IPC):
**G06N 10/40** $^{(2022.01)}$    **H01F 1/00** $^{(2006.01)}$

(52) Cooperative Patent Classification (CPC):
**G06N 10/40; B82Y 10/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Somekh, Guy**
  **75015 Paris (FR)**

• **Brousseau, Yvon**
  **Montréal Québec H2L 3V8 (CA)**

(72) Inventors:
• **Somekh, Guy**
  **75015 Paris (FR)**
• **Brousseau, Yvon**
  **Montréal Québec H2L 3V8 (CA)**

(74) Representative: **IPAZ**
  **16, rue Gaillon**
  **75002 Paris (FR)**

(54) **DETECTION AND INTERPRETATION OF THE QUANTUM INFORMATIONAL OSCILLATIONS OF A QUANTUM SPIN LIQUID**

(57)     A quantum field detection device for identification of quantum informational oscillations of a quantum spin liquid (QSL), the device comprising a body supporting said QSL; a quantum informational oscillation sensor for detecting a state of the QSL; a processor connected to the sensor and to a memory; and the memory storing program code. When executed by said processor, the code causes said processor to: extract quantum informational oscillations from a detection signal of said quantum informational oscillation sensor; process said quantum informational oscillations to resolve a simplicial complex to determine Hamiltonian operators of the extracted quantum informational oscillations; characterize at least one QSL topological signature of said quantum information oscillations using said Hamiltonian operators; and identify at least one object of surroundings of said detection device based on said at least one characterized QSL topological signature and using known QSL topological signatures. Corresponding method and network.

EP 4 583 011 A1

# Description

## Technical Field

This document relates to quantum physics and more specifically to the detection and interpretation of quantum fields and quantum informational oscillations.

## Background

What is described in the following is a mixture of what is known in the art and Applicant's insight into what is possible and what is desirable based on the state of the art. It is not an admission of what is known in the prior art.

In quantum mechanics, the expression "wave-particle duality", generally means that waves can exhibit particle-like properties while particles can exhibit wave-like properties and relates to a concept which makes it possible to explain certain observations linked to matter-radiation interaction. Depending on this interaction, objects can exhibit both wave and particle properties and can follow the Schrödinger equation. In 2015, it was demonstrated by R. Lopes et al. (Atomic Hong-Ou-Mandel experiment, DOI: 10.1038/nature14331) that the wave-particle duality, previously mainly associated with particles (photons, electrons, etc.), was also valid for atoms.

A quantum field is a set of fields (electric, magnetic, gravitational, etc.) and a particle corresponds to an excitation of these different fields. A particle, by its presence and/or its movement, creates a disturbance of one or more of these fields. But in quantum physics, we can validly (and necessarily) consider the opposite: that is to say that a disturbance of the quantum field can be modeled as a particle. This quantum representation can be considered as a "disturbance of the quantum field" having, at the same time, its wave component and its particle component in an integrated whole. In this quantum space, energy can partially pass from one quantum field to another.

In recent years, most of the efforts in research and development have focused on the interaction of the quantum field between pairs of particles (i.e., quantum entanglement) for use in quantum computers. In the context of quantum computers, quantum bits (qbits) need to preset the quantum state of particles (to control for a chosen spin up or spin down) and to entangle these particles with at least one other particle, which results in a need for highly controlled environments and conditions as well as these particles being isolated from their broader surroundings. Though well suited for quantum computers, such control is ill suited for other areas of highly promising research and uses of quantum fields.

It has been recently proposed to use the information comprised in "natural/free" quantum fields. The idea is to consider the quantum fields that naturally appear as a modulating superimposition or entanglements of individual quantum informational oscillations (information) unique to each particle or subparticle. To extract the valuable information from the "free" quantum fields (quantum informational oscillations), it would be required to develop a non-intrusive and passive measuring method and apparatus to avoid influencing the state(s) of the quantum fields and therefore corrupt the quantum informational oscillations. Therefore, it becomes evident that the techniques and most technologies used in the field of quantum computing do not allow for such passive observation.

While the observer effect is a well-known phenomenon in quantum physics that essentially prevents direct observation of the wave-particle duality of quantum mechanics, solutions have been put forward to allow for indirect detection or sensing of the states of quantum fields. In order to achieve this indirect probing of the quantum fields quantum spin liquids (QSL) have been considered as one of the most promising candidates.

The matter-radiation interaction can be considered as an exchange of quantum information between the matter which may be used as a quantum signature specific to a given particle. One of the interesting particularities of the QSL lies in its sensitivity to the surrounding quantum information (e.g., spin, magnetic field, electromagnetic field). Therefore the state of the QSL can depend on the, and therefore reflect, quantum state of the surrounding particles or molecules of matter.

It was previously shown that, in controlled environments and using complex fix experimental setups, that the quantum state of a QSL could be detected and measured.

However a method and device to reliably and accurately detect and interpret such quantum information (quantum informational oscillations) has yet to be developed.

It would be highly desirable to develop a method and device allowing for the detection and interpretation of the information comprised in the "free" quantum fields. It would also be useful to develop a reliable method or a compact device to detect and measure the various quantum states of a QSL to extract useful information (interpret and classify) from measured QSL states.

QSL has been developed and studied in recent years. The phase of matter known as QSL was first proposed in 1973 and is now well known by the persons skilled in the art (e.g., see overview - Quantum spin liquids by C. Broholm et al., DOI: 10.1126/science.aay0668). A QSL, that is generally characterized by its long-range quantum entanglement, includes materials comprising interacting quantum spins that cannot be magnetically ordered by reducing its temperature event near absolute zero temperatures or by introducing "geometrical frustration" in the molecular structure/matrix of the QSL (e.g., nitrogen vacancy centers in diamond). Various types of QSL were proposed and developed in the recent years (e.g., see Carbon Nanotube Devices for Quantum Technology by Andrey Baydin et al., DOI: 10.3390/ma15041535), such as nitrogen vacancy centers (NVC) in diamond where the spin of the NVC was used as an ultra-sensitive magnetometer at room temperatures.

Various models for solving the state(s) of a QSL have been presented, such as the Kitaev model, named after Alexei Kitaev, that is known for its "simplicity" and accuracy. It has been demonstrated that the Kitaev model is exactly solvable (e.g., see Concept and realization of Kitaev quantum spin liquids by Hidenori Takagi et al. which presents an exactly solvable S=1/2 spin model on a 2D honeycomb lattice, DOI: 0.1038/s42254-019-0038-2).

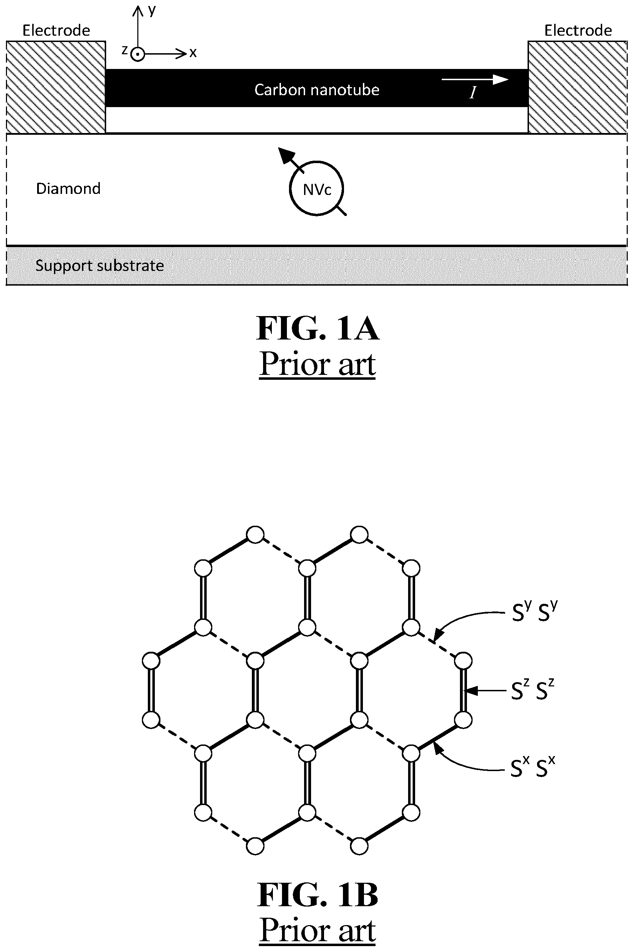

For more than 20 years, it has been demonstrated that a carbon nanotube on a NVC diamond, as illustrated in Figure 1A inspired from the work of Peng-Bo Li et al. (Hybrid Quantum Device with Nitrogen-Vacancy Centers in Diamond Coupled to Carbon Nanotubes, DOI: 10.1103/PhysRevLett.117.015502), makes it possible to obtain the eigenvalues of Pauli matrices with a satisfying level of precision. For example, Andrey Baydin et al. (Carbon Nanotube Devices for Quantum Technology, DOI: 10.3390/ma15041535) show that each sub-band of polarized light (from the axis of the nanotube - axis x of Figure 1A - to the perpendicular axes - axis y or z of Figure 1A -) can induce an angular momentum having a quantum number i and an eigenvalue of the Pauli matrices. It is the oscillation information (or "quantum informational oscillations") of a carbon nanotube which is measured. The surrounding magnetic field affects the energy levels of the NVC center, i.e., its "spin state". The combination of optical and spin properties of the NVC center generates an optical readout of the amplitude and orientation of the magnetic field, with an oscillation precision of a few nanometers, along the y-axis (see Figure 1A).

## Summary

A method and devices that can take advantage of the natural (non-controlled) states of the quantum fields are proposed herein in order to provide quantum field detection and interpretation. This new approach opens the possibility to a fresh view and understanding of quantum field uses and promises to give birth to a wide range of possible applications and new technologies.

In one broad aspect, the present disclosure relates at least in part to methods, devices and systems for remotely detecting, interpreting, classifying, storing and sharing quantum information for characterizing and/or identifying an object of the surroundings. The detection system can be portable, non-destructive, non-invasive, stable and reliable regardless of temperature variation or electromagnetic interference, or a combination thereof.

A broad aspect of the present disclosure is a quantum field detection device for identification of quantum informational oscillations of a quantum spin liquid (QSL), the device comprising: a body supporting the QSL; a quantum informational oscillation sensor for detecting a state of the QSL; a processor connected to the sensor and to a memory; and the memory storing program code that, when executed by the processor, causes the processor to: extract quantum informational oscillations from a detection signal of the quantum informational oscillation sensor; process the quantum informational oscillations to resolve a simplicial complex to determine Hamiltonian operators of the extracted quantum informational oscillations; characterize at least one QSL topological signature of the quantum information oscillations using the Hamiltonian operators; and identify at least one object of surroundings of the detection device based on the at least one characterized QSL topological signature and using known QSL topological signatures.

In some embodiments, the characterization of the at least one QSL topological signature comprises calculating the Hamiltonian tensor operators of the QSL using a Hamiltonian tensor product.

In some embodiments, the program code, when executed by the processor, further causes the processor to refine the at least one QSL topological signature; and wherein the identification of the at least one object comprises identify at least one object of the surroundings of the detection device based on the at least one refined QSL topological signature and using the known QSL topological signatures.

In some embodiments, the identification of the object comprises fetching, from a database storing known QSL topological signatures, a least one of the known QSL topological signatures to interpret the characterized quantum informational oscillations.

In some embodiments, the detection device further comprises the database.

In some embodiments, the database is a remote database and wherein the program code, when executed by the processor, further cause the processor to send the detected QSL topological signature to the remote database.

In some embodiments, the characterized quantum informational oscillations are uploaded to a remote processing device, wherein the remote processing device uses a database storing known QSL topological signatures to identify at least one object in the surroundings based on the uploaded characterized quantum informational oscillations.

In some embodiments, the device receives, from the remote processing device, data about the at least one object in the surroundings.

In some embodiments, the detection device further comprises a user interface providing information about the identified object to a user of the detection device.

In some embodiments, the body supporting the QSL comprises a diamond comprising at least one nitrogen vacancy center (NVC) and wherein the quantum informational oscillation sensor comprises at least one carbon nanotube (CNT) in close proximity to the NVC.

In some embodiments, the diamond comprises a matrix of nitrogen vacancy centers and wherein the quantum informational oscillation sensor comprises a matrix of CNTs, each in close proximity to at least one nitrogen vacancy center of the matrix of nitrogen vacancy centers.

In some embodiments, the extraction the quantum informational oscillations from a detection signal comprises determining an electric charge density and a magnetic moment of the at least one CNT.

In some embodiments, the extraction of the quantum informational oscillations from a detection signal comprises determining an electric charge density and a magnetic moment of at least one of the matrix of CNTs.

In some embodiments, the QSL remains a quantum spin liquid when an ambient temperature is between about -40°C to about 45°C.

In some embodiments, the quantum informational oscillations are processed based on wavefunction-based quantum systems.

In some embodiments, the quantum informational oscillations are processed based on particle-based quantum systems.

Another broad aspect of the present disclosure is a method of identification of quantum informational oscillations of a quantum spin liquid (QSL), the method comprising: providing a QSL coupled to a quantum informational oscillation sensor; detect the quantum informational oscillation of the QSL using the quantum informational oscillation sensor; process the quantum informational oscillations to resolve a simplicial complex to determine Hamiltonian operators of the extracted quantum informational oscillations; characterize at least one QSL topological signature of the quantum information oscillations using the Hamiltonian operators; and identify at least one object of surroundings of the detection device based on the at least one characterized QSL topological signature and using known QSL topological signatures.

In some embodiments, the characterization of the at least one QSL topological signature comprises calculating the Hamiltonian tensor operators of the QSL by considering a Hamiltonian tensor product.

In some embodiments, the method further comprises refining the at least one QSL topological signature; and wherein the identification of the at least one object comprises identify at least one object of the surroundings of the detection device based on the at least one of the refined QSL topological signatures and using the known QSL topological signatures.

In some embodiments, the QSL comprises a diamond having at least one nitrogen vacancy center (NVC); wherein the quantum informational oscillation sensor comprises at least one carbon nanotube in close proximity to one of the at least one NVC; and wherein the detecting of the quantum informational oscillation of the QSL comprises determining an electric charge density and a magnetic moment of the at least one CNT.

In some embodiments, the method further comprises a step of fetching at least one of the known QSL topological signatures from a signature database.

Yet another broad aspect of the present disclosure is a QSL topological signature network for identification of quantum informational oscillations of a quantum spin liquid (QSL), the network comprising: a plurality of any one of the embodiments of the quantum field detection devices as previously defined; a database storing known QSL topological signatures; wherein each of the database and the plurality of quantum field detection devices comprises a compatible communication mean for exchanging data at least between the database and each one of the plurality of quantum field detection devices; and wherein the database receives and stores QSL topological signatures detected and characterized by the plurality of quantum field detection devices.

In some embodiments, the communication mean comprises a receiving and transmitting antenna.

**Brief Description of the Drawings**

The invention will be better understood by way of the following detailed description of the embodiments of the invention with reference to the appended drawings, in which:

Figure 1A is a schematic representation of a state-of-the-art nanotube-NV hybrid setup comprising a current-carrying nanotube suspended above a diamond sample and producing a magnetic field gradient that enables interaction with NVC spins through electromagnetic pulses, wherein individuals optically resolvable NV centers are implanted/located 5-10 nm below the surface of the diamond substrate.

Figure 1B is a honeycomb lattice of the prior art considered used by the Kitaev model to represent the covalent bond between a carbon atom of a carbon nanotube and its immediate neighbors.

Figure 2A is a block diagram of an exemplary embodiment of the detection apparatus.

Figure 2B is a block diagram of an embodiment of the identification module of the detection module.

Figure 2C is a flowchart of possible steps of an embodiment of the method for interpreting and characterizing a detected QSL topological signature.

Figure 3 is a block diagram of one possible embodiment of the proposed detection device.

Figure 4 shows a wave vector of a "sheet" of carbon analogous to the structure of a carbon nanotube (CNT).

Figure 5A shows all 4-dimensional systems of the triangle used in the prior art to solve a simplicial complex.

Figure 5B shows a strict trapping Hamiltonian of inside triangles used in the prior art to solve a simplicial complex.

Figure 5C shows the Z operator acting on the base of the triangle used in the prior art to solve a simplicial complex.

Figure 5D shows the X operator acting on the base of the triangle used in the prior art to solve a simplicial complex.

Figure 5E shows a symmetric base used to obtain the Hamiltonian of Figure 5F as presented in the prior art to solve a simplicial complex.

Figure 5F shows the diagonalized Hamiltonian as presented in the prior art to solve a simplicial complex and obtained using the symmetric base of Figure 5E.

Figure 6A shows the bond states of first neighbors used in the prior art Kitaev model for integrating the accumulation of possible 6-link states in a hexagon.

Figure 6B shows the bond states of second neighbors used in the prior art Kitaev model for integrating the accumulation of possible 6-link states in a hexagon.

Figure 6C shows the bond states of third neighbors used in the prior art Kitaev model for integrating the accumulation of possible 6-link states in a hexagon.

Figure 7 shows a 16-vertices magnetic models used in the state of the art to complete Exact Diagonalization calculations.

## Detailed Description

Unless the context requires otherwise, throughout the specification and claims which follow, the word "comprise" and variations thereof, such as "comprises" and "comprising" are to be construed in an open, inclusive sense, that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

From the foregoing it will be appreciated that, although specific embodiments have been described herein for purposes of illustration, various modifications may be made without deviating from the spirit and scope of the teachings. Accordingly, the claims are not limited by the disclosed embodiments.

The embodiments are in such detail as to clearly communicate the disclosure without limiting the anticipated variations of the possible embodiments and may encompass all modifications, equivalents, combinations and alternatives falling within the spirit and scope of the present disclosure. It will be appreciated by those skilled in the art that well-known methods, procedures, physical processes and magnetic heads may not have been described in detail in the following so as not to obscure the specific details of the disclosed invention.

To better appreciate and understand the present document, the reader is strongly invited to set aside his habits/reflexes of interpreting the quantum field concepts (e.g., exchange of information and energy) by "separating" waves and particles to visualize or interpret some of the following concepts that require the wave-particle duality of quantum physics to remain "superimposed".

In this document, quantum informational oscillations (QIO) correspond to information (signatures) associated with and generated by the quantum state ("vibrations") of electrons in a quantum field of materials (single or a plurality of chemical elements) or objects (simple or complex). In the present document, the quantum informational oscillations are used to determine operators (e.g., Hamiltonian tensor operators) specific to one object that are used to define a QSL topological signature.

Every electron in every atom of the Periodic Table of Elements has its own QSL topological signature. The same applies to each molecule present in various materials or structures. For example, each allotrope of carbon (diamond, graphite, graphene or fullerenes) can have its own QSL topological signature. But each molecular assembly (e.g., alloys) may also has its own QSL topological signature, through an appropriate relational function between the electronic and nuclear spins of the constituent materials (e.g., a convolution of QSL topological signatures of the molecules).

In this way, the detection of the quantum spin states of a material, through their vibrations, can be linked to the signature of the quantum information oscillations of this QSL state (i.e., the QSL topological signature). In other words, based on the constantly increasing/updating database of known QSL topological signatures, an object can be recognized by its QSL topological signature.

Also, in this document in the context of the proposed method and device, "signatures" or measured/detected signatures represent QSL topological signatures in response to the presence of at least one object in the QSL's environment.

The QSL topological signature can comprise information about the surroundings of the QSL since the state of the QSL can react to its surroundings and can therefore effectively be used to interpret or represent the QIO the QSL surroundings. In other words, the QSL topological signature can be used as a "proxy" to QIO of the surrounding environment.

It will be appreciated that an object can include, in the context of the proposed invention and device, any subatomic particle, atom/element, molecule, chemical compound, alloy, material, simple object, complex object, assembly, structure, environment, living organism or a combination thereof.

In a quantum field, the behavior of electrons of a material can be represented or understood according to the Kitaev model, which can consider that each electron is limited to (or is trapped within) a division (e.g., a triangle) of a 2D geometric matrix (e.g., a triangular lattice) and can store each electron one by one, in a possible path (e.g., clockwise or counterclockwise circular paths within the triangular lattice). In the Kitaev model, these electrons may be considered as flowing along the edges of a corresponding one of the divisions of the geometric matrix without losing energy. While the actual electrons may not be measurable and their presence may not be visualized (due to Heisenberg's uncertainty principle), it may be possible to establish their probability of finding the particle a given location (e.g., on one of the vertices of each triangle). This can be referred to as a specific quantum topological state, called "chiral" or "liquid" (which is not to be confused with the liquid state of classical physics). This is a purely quantum behavior that can be analogous to that of the Quantum Hall Effect.

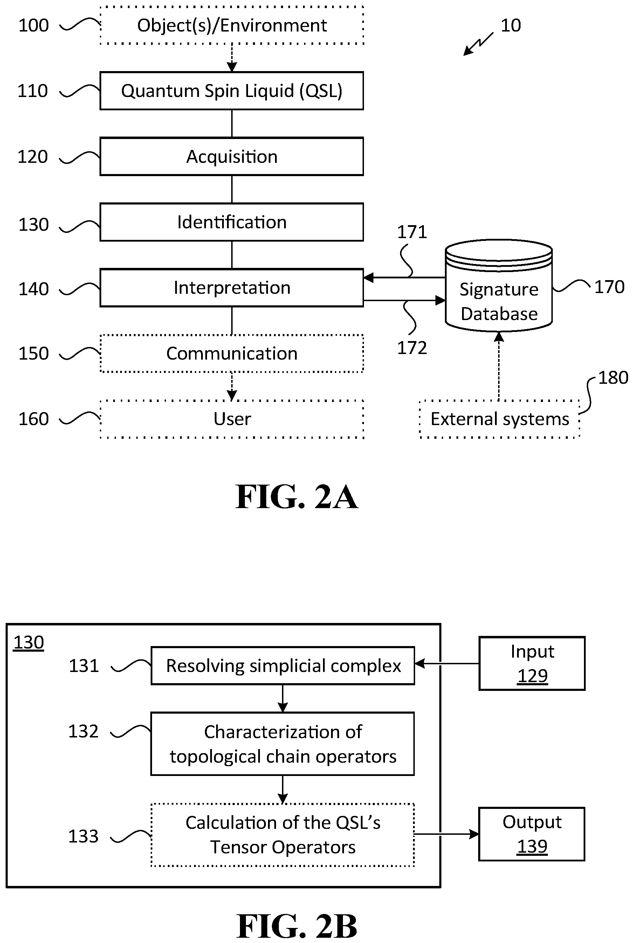

Figure 2A presents a block diagram of an exemplary embodiment of the proposed detection device 10, which may comprise any suitable combination of: a QSL 110 that may have a quantum characteristic (i.e., state) that can respond to (i.e., be influenced by) the surrounding environment (e.g., QIO of the surroundings); an acquisition module 120 acting a QIO sensor that may be coupled or connected to the QSL 110 and configured for allowing recording/monitoring of the quantum characteristics of the QSL 110, measuring or quantifying of at least one quantum characteristic of the QSL 110; an identification module 130 that may be used to calculate, convert and/or translate the information acquired by the acquisition module 120 into quantified values or classified information; an interpretation module 140 that may be used to analyze and preferably identify/match the output data (e.g., quantified values or classified information) of the identification module 130, which can be done using the information stored and fetched from the database 170 (server or memory for compiling/downloading, sorting and distributing/uploading characterized QSL topological signatures - associated objects) that can be connected to one or more external system 180 (e.g., data center or other detection device 10); a communication interface 150 (e.g., user interface) that may generate a communication signal (e.g., electric signal, electromagnetic signal or sensory signal: tactile, auditory or visual signals) for transmitting information and data from the interpretation module or 140; and possibly a user 160 of the detection device 10 information.

It will be appreciated that Figure 2A may also be interpreted as showing various steps of a method for such as a step of providing a QSL; acquiring the raw QIO of the provided QSL; a step of identifying the information (e.g., QIO) of the acquired raw QIO of the QSL to discriminate various signatures; a step of interpreting the signatures to be matched or attributed to a corresponding object (e.g., using the information of the known object stored in the signature database); a step of communicating the resulting information (e.g., identified objects) to the user 160 via an interface 1002 (e.g., user interface), for example; and a step of providing additional or complementary information of the known objects to the signature database 170 from an external system 180.

The QSL 110 can comprise various types of defects in their molecular structure. For example, a diamond comprising NVC defects can be considered as a QSL 110, where the NVCs can have characteristics (e.g., electron spin) that detect or fluctuate according to QIO (e.g., quantum spins) of surrounding objects (e.g., particles). In a sense, the NVC can act as an ultrasensitive magnetometer, which may be a result of electron spin resonance (ESR).

While the QSL 110 of the detection device 10 can be any suitable QSL, in a preferred embodiment, the QSL can be stable (i.e., remain in the QSL state) at room or ambient temperature (e.g., between -40° C to 45° C) in order to avoid the need for controlling its temperature (e.g., avoid the need for an integrated cooling system for significantly cooling the QSL medium). For example, the QSL 110 may be an NVC in diamond that can remain in the required state at ambient temperatures.

The acquisition module 120 can be any suitable sensor or detection device coupled with or used in combination with the QSL 110 allowing for the acquisition step of measuring or detecting the QIO of the QSL. In one embodiment, the acquisition module 120 comprises one or more carbon nanotube (CNT) coupled (e.g., at a near distance to the NVC allowing for interaction between the NVC and the CNT) with the NVC (e.g., NVC of a diamond - e.g., as illustrated in Figure 1A).

In some embodiments, for multi-material objects, the QSL electronic and nuclear signature may preferably be directly and globally obtained/determined without necessarily requiring each and every of the constituents of relational functions. In other words, the QSL topological signature of multi-material objects may be considered as one signature of a given multi-material (e.g., allows or living cell or animal) instead of considering as a complex combination of a plurality of single materials.

Various detection devices comprising CNT may be used as the QIO sensor of the acquisition module 120 to measure the QIO of the QSL and to translate or transpose the quantum information of the QIO into electronic/digital information and data. In fact, as summarized by Baydin et al. (Carbon Nanotube Devices for Quantum Technology by Andrey Baydin et al., DOI: 10.3390/ma15041535), CNTs possess a variety of electrical, optical and mechanical properties that can be ideal for quantum devices, especially for processing of quantum information. They discuss and detail developments made in recent years on single-wall CNT based single-electron devices, nanocircuits, and hybrid quantum devices coupled to NV centers in diamond, which are especially promising for controlled and tunable quantum information processing applications and that may be used at room temperature. More details of one of the possible embodiments of the acquisition module 120 (CNT and NVC coupling apparatus) was provided by Li et al. (Hybrid quantum device with NV centers in diamond coupled to carbon nanotubes, DOI: 10.1103/PhysRevLett.117.015502).

In some embodiments, the acquisition module may include a carbon nanotube matrix comprising a plurality of CNT. In one embodiment, the CNT matrix is a matrix sometimes referred to as a "forest of CNT" (e.g., see Comparison of carbon nanotube forest growth using AlSi, TiSiN, and TiN as conductive catalyst supports by Junwei Yang et al., DOI: 10.1002/pssb.201451162) of parallel columnar CNT attached at a first one of their ends to a catalyst layer (e.g., CNTs grown on the catalyst), the CNT matrix can be positioned so that the second one of their ends are near a surface of the diamond layer of the diamond NVC QSL.

The purpose of the CNT is to measure the QIO of the NVC without significantly disturbing the state of the NVC by measuring the oscillations of the CNT (e.g., values of electric charge density and magnetic moment) that are responding to the QIO of the NVC.

It will be appreciated that, in order to be able to, gradually, process "all" the spectrum of the objects (including metals, semiconductors etc.), a fine detection of carbon nanotube oscillations (e.g., values of electric charge density and magnetic moment of the CNT) in a wide spectrum must be ensured. To do so, Raman diffusion (oscillation frequencies by several THz) can be used or Brillouin diffusion can be used (limited below 300 MHz).

A carbon nanotube (CNT) - acquisition module 120 - coupled to diamond comprising NVCs - QSL 110 - (see Figure 1A) can be used to measure the QIO of one or more NVC since the CNT can vibrate according to the QIO.

However, the QIO of an NVC can comprise a combination of a plurality of individual fundamental QIO of surrounding particles, which may not readily be distinguishable from one another. Traditionally, such a combination of individual QIO cannot be used to effectively extract useful information. This is one of the problems that can be solved by the proposed quantum detection method and device by enabling the use of such a combination of QIO. Specifically, in some embodiments, the QIO can be used to distinguish, identify or characterize objects present in the surroundings of the QSL.

In some embodiments, identification step 130 may comprise an initial filtering sub-step for excluding or removing, from the input signal 129, the signal contribution of or a signal/signature specific to any component of the detection device 10 (e.g., specific to the QSL 110 and/or to the acquisition module 120), which themselves have quantum signatures and should therefore produce a specific (e.g., constant) QIO. For example, such an initial filtering sub-step can include a step of performing a deconvolution of the QSL topological signature of at least one of the components of the detection device 10 from the measured/detected QIO or QSL topological signature of the QSL. In an embodiment, the QIO of the QSL 110 and of the acquisition module 120 are automatically filtered out from the measured signal so that the resulting output signal 139 (e.g., measured QSL topological signatures) does not include QIO of these components of the detection device 10.

Figure 2B shows some of the steps (sub-steps) that may be performed by one embodiment of the identification module 130 (as part of the identification step 130). The identification module can perform any suitable sub-steps, which may include, but are not limited to, a step 131 of resolving the simplicial complex, a step 132 of characterizing the topological chain operator, and a step 133 of calculating the tensor operators of the QSL. The module or step 130 can effectively use the input signal 129 (e.g., raw detected/acquired/measured data), which can be received from the acquisition module 120, to get or generate a more coherent or more distinctive or more meaningful information/data, which may be comprised in the output signal or identified output signal 139 of the identification module 130. In one embodiment, the output signal 139 (e.g., various identified signatures) may be sent to the interpretation module 140 for subsequent matching with a known object.

The input signal can be any suitable form of the QIO that may be provided by the acquisition module 120. For example, in embodiments, where the acquisition comprises CNT coupled to the NVC of the QSL 110, the input signal 129 of the identification module 130 may comprise values of electric charge density and magnetic moment of the CNT, which would be influenced by the quantum fields of the surroundings of the QSL 110.

The step 131 of resolving the simplicial complex can be done using any suitable method and model proposed in the prior art. In one embodiment, the simplicial complex can be based on the well-known Kitaev Model. This step can use the QIO to determine Hamiltonian operators (e.g., in a Hamiltonian matrix).

Quantum spin states create interaction bonds between its atoms. Through these interactions, each carbon atom is covalently bonded to three adjacent carbon atoms which can be represented in the simplicial complex such as the hexagon honeycomb lattice structure if Figure 1B. In the Kitaev model, the bonds with these three atoms can be represented by six vectors, which may be used to create bonds (represented by the sides of the hexagon lattice and referred to S^ links). In the embodiment of the model represented in Figure 1B, each hexagon consists of 6 links and the central hexagon is linked to its neighbor by 2 vertices.

In most atomic structures of QSL, there are more than immediate neighbors. It is possible, to consider more than the effect and links of the immediate neighbors, a plurality if hexagons may be considered to carry out the calculations for recognizing the vibrations of the QSL quantum state (of the quantum field).

For example, with 16 hexagons, the precision obtained may be sufficient or more than sufficient for some of the various embodiments to enable accurate discriminating and determine the Hamiltonian matrix comprising Hamiltonian operators of the detected quantum informational oscillations. It will be appreciated that the required calculations can be performed, for example, on a standard processor of the type used in today's cell phones.

In some embodiments, the QSL topological signature can be extracted from the Hamiltonian operators. In some embodiments, the QSL topological signature can be defined by the topological chain operator of an object. The step 132 of characterizing the topological chain operator can be done using the determined Hamiltonian operators.

In some cases where the characterized QSL topological signature is of a single object (i.e., when it is not a superimposition of QSL topological signatures of various objects), the QSL topological signature may be directly sent to the interpretation module to be matched with a known signature.

In most cases, the QIO may comprise information about a plurality of objects (e.g., a plurality of materials), so that a step 133 of calculating the Hamiltonian tensor operators of the QSL may be required to discriminate QSL topological signature "individual" objects that may be comprised (e.g., superimposed) in the Hamiltonian matrix resulting from step 132. In other words, step 133 can be used to identify, extract or isolate the various QSL topological signatures of various objects that can be comprised within a same Hamiltonian matrix.

QSL topological signatures that comprise Hamiltonian tensor operators of, for example, two various objects (e.g., materials) can correspond to the matrix tensor product of the Hamiltonian matrix as per the common quantum mechanical approach. Therefore the QSL topological signature of each of the two objects may be determined by calculating the inverse of the tensor product of the Hamiltonian matrix determine with the previous step 132 thereby obtaining two Hamiltonian matrices, one for each object.

In embodiments where the state of an object with more than two materials are detected, a matrix with $2^n$ complex amplitudes can be used. This matrix represents the appropriate "relational function" between the electronic and nuclear spins of the materials making up this object with more than two materials. The products of the Hamiltonian matrices can be calculated in the same way as per the case with the object made out of two materials. Of course, the computation time required to obtain this matrix of the objects with more than two materials, itself, and then its eigenvalues, requires appropriate computing power. As an order of magnitude, with the off-the-shelf microcomputers, processing the general QSL state of an object made up of around 20 different materials can be achieved within acceptable processing times.

In one embodiment, the output signal 139 can comprise the determined/calculated Hamiltonian tensor operators of the QSL (the QSL topological signature(s)). The output signal 139 may be sent to the interpretation module 140 so that the QSL topological signature(s) may be matched to a known QSL topological signature, thereby allowing for identification of the corresponding object(s).

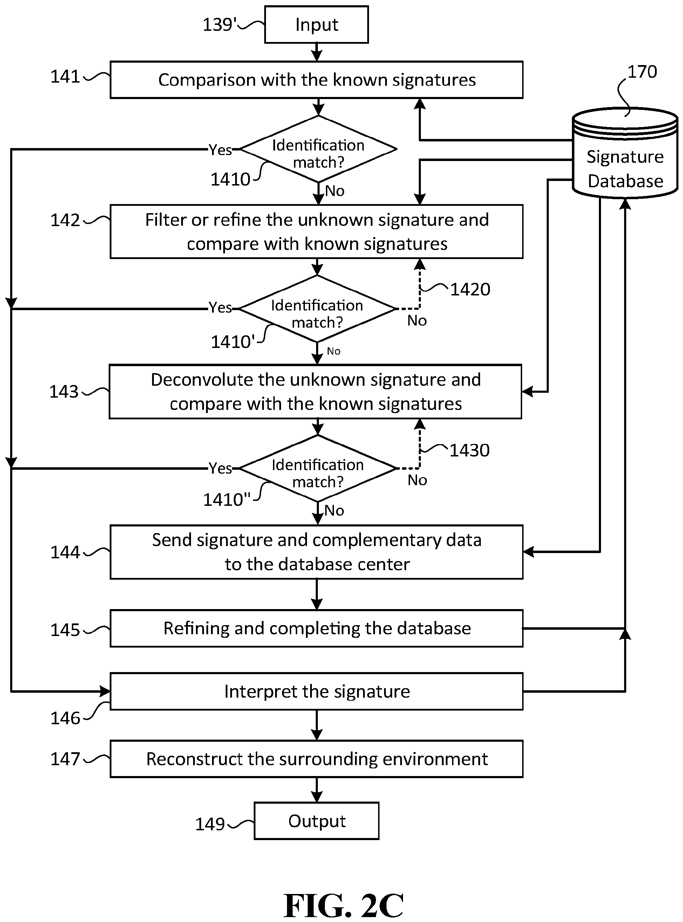

The identification module 140 of Figure 2A can comprise any suitable combination of steps that can allow the accurate identification/matching of the resulting QSL topological signature(s) using known QSL topological signatures that may be provided by an extensive list stored in the signature database 170. Examples of possible embodiments of such suitable steps of the identification module 140 are detailed hereafter when referring to Figure 2C.

The signature (QSL topological signature) database 170 can be any suitable data storing component or device that can also be coupled to and comprise one or more means of communication (electric, WIFI, etc.) allowing them to communicate and/or interact with any other suitable module/component of the proposed system/apparatus. In one embodiment, the signature database 170 can be exchanging (transmitting, uploading and downloading) data through any means of communication it may have. The signature database 170 can be configured and/or programmed to compile, classify, store, sort and/or archive the data it may receive from any of the module components (e.g., the interpretation module 140) of the detection device 10 and/or any alternative source (e.g., external system(s) 180) that can provide additional and/or alternative information. It will be appreciated that the signature database may store any suitable or necessary information (e.g., essential information and complementary information), for example, the QSL topological signature may be paired with information (name, type of environment it is usually found in, visual description, chemical composition, etc.) of the corresponding object and may comprise additional or complementary data such as information about the person/lab team/user that first detected a signature or a number of times the signature was detected and matched by a same or various detection devices 10.

In one embodiment, in the case of molecules, electronic and nuclear signatures can be theoretically determined from the QSL topological signatures. In the case of alloys or multi-material objects, a "relational function" between the QSLs electronic and nuclear signatures of the constituent materials can be established for each one from the know electronic and nuclear signatures of molecules.

In some embodiments, external systems or device 180 may be any suitable distinct system or device (e.g., distinct detection devices 10, computing devices, hardware or software networks, facilities) that can provide new or complementary information to the signature database. The external systems 180 may comprise at least one means of communication (electric, WIFI, etc.) allowing for connectivity with the signature database 170.

It will be appreciated that the signature database 170 or a data center that can be in communication with one of detection device 10 may also be connected or connectable (remotely or physically) to another detection device 10 up to all of the other detection devices 10 that may be in operation, regardless of the specific embodiment or use of the detection device 10. This can result in a network of detection devices 10 that may be interconnected through the signature database 170 and/or the data center.

In some embodiments, the detection device 10 can comprise a communication module 150, which may comprise an interface 1002 (e.g., user interface or a transmitting device) for communicating information/data to the user or any suitable receiving device, respectively. Since the proposed method and device can yield a wide range of embodiments that may be used for various purposes and in various fields, the communication module 150 may be adapted according to any of the various embodiments. It will be appreciated communication module 150 can comprise more than one communication device. For example, in embodiments where the communication module 150 comprises a user interface can further comprise one or more transmitting device (e.g., electric cables, optical fibers, WIFI, Bluetooth® and/or 5G network).

In some of the handheld embodiments, the communication module 150 may preferably comprise a user interface (e.g., tactile device, audio device, audio device, display or touch screen) to provide useful information to the user 160.

In embodiments, where the detection device 10 may be used as part of a probing device (e.g., mining exploration).

The user of the detection device may be, depending on the embodiment, may be a worker (e.g., machine operator), a researcher (e.g., a scientist at the database center) or a visually impaired user, for example.

Now referring to Figure 2C presenting a flowchart of one embodiment of the proposed method(s) for interpreting and/or matching the measured QSL topological signature to identify or detect an object of the user's surrounding environment. A suitable selection of the steps detailed in the flowchart of Figure 2C may be completed by the interpretation module 140 (or interpretation step 140) of the embodiment of Figure 2A.

The input 139' of the interpretation module 140 can comprise the measured QSL topological signature ("unknown" or not yet identified or no yet characterized signatures) outputted by the identification module or step 130 that may be yet to be matched with at least one of the known QSL topological signatures (e.g., from the database 170) or another object yet to be characterized with a corresponding QSL topological signature. In some embodiments, the QSL topological signature may be transposed/translated into their wave-function counterpart (e.g., using theories based on the matrix formulation of quantum field, which are well known in the art and are based on the work of Pascual Jordan first to propose the quantum field theory), which may be useful to complete or emphasize the knowledge of known QSL topological signatures. For example, for some elements of the periodic table, the QSL topological signature may be transposed/translated into a corresponding wave function that can be solutions for the Schrödinger equation, which may be found in the world reference book (e.g., Atkins physical chemistry, 11th edition, by Peter Atkins, Julio de Paula & James Keeler).

A first comparison step 141 may be completed using the input signature (e.g., "raw" measured QSL topological signatures) and the information/data (e.g., known/characterized QSL topological signatures) from the signature database 170 or any alternative source of data comprising known/characterized QSL topological signatures (e.g., internal memory of a detection device or a remote server).

The comparison step(s) can comprise one or more data matching steps (e.g., simple difference calculating steps and sort, any suitable matching algorithm and/or trained machine learning or artificial intelligence). In one embodiment, the QSL topological signature to be matched is compared to a selection (a subset) of the known QSL topological signatures to find a best match. In one embodiment, the QSL topological signature to be matched is compared to the entirety of the known QSL topological signatures to find a best match. In one embodiment, the QSL topological signature to be matched is compared to a selection or all of the known QSL topological signatures until a chosen degree of matching (e.g., a degree of confidence threshold) is reached and the QSL topological signature is considered to be matched.

Decomposition and matching step: The wave can be decomposed into wavelets, which can then be processed using state-of-the-art software (increasingly precise and integrated) derived from Fourier series decomposition. There are two preferred ways of completing the identification of an unknown QSL topological signature: - First process: either "scan", successively one by one, each of the not yet matched detected QSL topological signatures by the acquisition module 120 of the proposed detection device 10 and compare them with each known QSL topological signature. - Second process (the opposite): compare each known QSL topological signatures with each of the not yet matched detected QSL topological signatures. This second process can be significantly faster. On the other hand, and unlike the first, this process excludes "learning" the environment encountered by each detection device 10. And yet, this learning alone may enable using the detection and analysis of useful objects, that may still be unknown (not yet part of the known QSL topological signatures). However, the first procedure can be preferable it may require lower computing power.

The comparison step 141, or any other comparison steps (142, 143, etc.), may be submitted to a matching condition 1410, or 1410' and 1410", to assess if the matching is sufficient and accurate to ensure quality control of the matching between the QSL topological signature to be matched and the corresponding one(s) of the known QSL topological signature(s). The matching condition may be based on any suitable verification or validation tool (e.g., any suitable validation programs or algorithms and/or trained machine learning or artificial intelligence) to ensure that the matching respect the chosen criteria (e.g.: distance/gap/difference - in mathematical sense of the term - relative to the most similar known signature(s); artificial intelligence possibly suggesting objects corresponding to known signatures that may be chosen based on various parameters such as a closest or most relevant behavior; Monte-Carlo method whose residual uncertainty is secured by standardized root-mean-square-deviation; in some specific conditions, Nelder-Mead method coupled at the back of quasi-newton).

If the matching condition 1410 is respected (indicated as "yes" in the flowchart), the step 146 of interpreting the QSL topological signature can be completed to translate the QSL topological signature to information about an object of the surrounding environment. If the matching condition 1410 is not respected (indicated as "no" in the flowchart), a refining step may be completed to help the finding match between the QSL topological signature to be matched and the known QSL topological signatures.

In an embodiment, if the matching condition 1410 is not respected, the step 142 of filtering or refining the unknown QSL topological signature before retrying to match it with a known QSL topological signature.

In an embodiment, if the matching condition 1410' is not respected, the step 143 of performing a deconvolution the unknown QSL topological signature before retrying to match it with a known QSL topological signature. In one embodiment, as illustrated by 1420, the filtering or refining step 142 may be repeated (e.g., iteratively) using some of the possible filtering/refining methods of this step 142 when possible or applicable.

The deconvolution sub-process: However, for the sake of undeniable precision, it may be preferable to remove any or most parasitic "noise" (i.e. locating and removing it) using a sub-step ("sub-process") of Deconvolution : So, let's say we're looking for a wave f in a set of waves f * g (where g is the set of other waves not being looked for). In this case, we seek to solve f * g = h. But we must bear in mind that "h" can (should) be polluted by various measurement-related "e" noises, which would interfere with the raw, classical decomposition calculation. To avoid this noise disturbance, statistical calculations can be used, which, in quantum physics, are perfectly suited to detecting and thus suppressing/reducing this noise: these are "Wiener filter" type filtering (mastered for over 20 years, these are a practical, high-performance infinite extension of Karman filters, for example, see the paper by Marc Renaud title *Filtre de Kalman. Comparaison avec le filtre de Wiener,* https://laas.hal.science/hal-01523417).

In an embodiment, if the matching condition 1410" is not respected, the step 144 of sending the unknown QSL topological signature and associated data (e.g., complementary data) to a data center to be further analyzed. In one embodiment, as illustrated by 1430, the deconvolution that may be performed in step 142 may be repeated (e.g., iteratively) when possible or applicable.

In some embodiments, the step 140 can comprise a sub-step 142 that can include at least one of a filtering or a refining sub-step, which may comprise any suitable calculation or modeling methods. The refining sub-step may consist of repeating of the characterization of the topological chain operators with a higher resolution (e.g., using the Ketaev honeycomb model with 40 links - 440 possible QSL topological signatures) to obtain a more refined detected QSL topological signature. The filtering sub-step may consist of filtering the detected QSL signature using a Wiener Filter (e.g., see *Filtre de Kalman. Comparaison avec le filtre de Wiener.* By Marc Renaud : https://laas.hal.science/hal-01523417). In some embodiments, the step 142 can comprise a sub-step of intensify the detected QSL signature using a Möbius strip component (e.g., see Absorption modes of Möbius strip Resonators, Joshua K. Hamilton, Ian R. Hooper & Christopher R. Lawrence, DOI: 10.1038/s41598-021-88280-x).

In some embodiments, once the filtering or refining of the sub-step 142 is completed, the filtered or refined QSL topological signature(s) to be identified can be compared to the known QSL topological signatures that can be compiled in and fetched from the QSL topological signature database 170 (e.g., QSL topological signature logs). In some cases 1420, when there is no identification match with the known QSL topological signatures and an additional filtering or refining methods of the sub-step 142 can be further applied, one or more of these additional filtering or refining may be applied to the QSL topological signature to be identified.

In some embodiments, the step 140 can comprise a sub-step 143 for the deconvolution the detected QSL topological signature (e.g., refined and filtered signature that is not yet attributed to an object) into a plurality of QSL topological signatures in order to better be matched with the known QSL topological signatures (e.g., refined and filtered signatures that are associated with a given object) of the database 170. In some embodiment, the resulting plurality of detected QSL topological signatures can comprise unknown signatures or can comprise one or more known QSL topological signatures and one or more unknown QSL topological signatures. It will be appreciated that the QSL topological signature may be qualified or classified as being a "known" signature when it can be matched with one (e.g., QSL topological signature of an atom - for example, matched with the signature of hydrogen from the database 170) or more (e.g., a convolution o combination of a plurality of QSL topological signatures - for example, matched with the signature of an alloy from the database 170).

In some embodiments, the step 140 can comprise a sub-step 144 of sending signatures (e.g., QSL topological signatures) and complement data to a database center. The database center may be any suitable database and/or a computing center which can be autonomous may be managed manually or with the help of an artificial intelligence and can be accessible by one or more operator (e.g., person skilled in the art).

In some embodiments, the step 140 can comprise a sub-step 145 of refining and completing the database 170 of known QSL topological signatures. The sub-step 145 may or may not yield any identification or interpretation of the unknown QSL topological signature(s). In the cases where a previously/initially unknown QSL topological signature is identified and assigned to a corresponding object, the database 170 may be updated by adding the known QSL topological signature and corresponding assigned object. In the cases where an unknown QSL topological signature cannot be identified or assigned with sufficient confidence, the database 170 may or may not be updated by adding the unknown QSL topological signature(s), which can be identified as unknown signatures and may later be used (e.g., to be later identified or assigned by considering a selection of other unknown QSL topological signatures and/or subsequent known QSL topological signatures that may be identified and assigned at a later moment). This sub-step 145 may be completed at a database center, where the database 170 may be located or where it may be managed from.

The sub-step 145 can include ensuring that there is actually no match possible with the known QSL topological signatures of the database 170, which may be necessary to prevent any error that may be attributable to the detection device 10 from which the QSL topological signature to be identified originated from or may be necessary if more powerful computing capacities are required to fine-tune the matching steps attempted by the detection apparatus.

In some embodiments, the sub-step 145 can comprise analyzing the signal and complementary data in order to help identify the possible sources of the detected signature. For example, the complementary data can be used to narrow down the possible object that may correspond to a detected QSL topological signature (using contextual information) or directly determine the corresponding object (using complementary object or environment characterization and identification).

The complementary data may be provided by various complementary devices (not shown). In some embodiments, the detection device 10 can be connected to or comprise various modules or devices (geo-localization device, audio recorder, temperature sensor, etc.) that may be used to determine or extrapolate a type of environment (in a building, in a park, in a forest, in a vehicle, underground, etc.) of the surroundings of the detection device 10. In some embodiments, the complementary devices can include, but is not limited to, any light sensing device (RGB camera, infrared cameras, SPAD sensors, light polarization sensors, spectrometers, etc.) or any other device (radioisotope identification devices, neural network, image processing device, magnetometer, etc.) that may be used to identify and/or characterize one or more specific objects within the surroundings of the detection device 10. It will be appreciated that, in some embodiments, the data/information provided by such complementary devices may be used or processed by artificial intelligence or machine learning in order to interpret them to accurately identify and/or characterize the object(s) of the surroundings, and therefore ensure better characterization of the detected QSL topological signatures (better matching between signature and corresponding object(s)). This may be useful to build up the database of the known QSL topological signatures by detecting the QSL topological signatures of known objects, to narrow down the list of possible objects belonging to the detected QSL topological signature or to confirm that the matching done by the detection device 10 is accurate or not.

In some embodiments, the step 140 can include a sub-step 146 that may comprise interpreting the QSL topological signature can be completed to translate the QSL topological signature to concrete (e.g., human scale) information about (e.g., the nature of) an object of the surrounding environment. The interpreted QSL topological signature(s) may be used to reconstruct (interpretation of various features and arrangements/layouts in the 3D space surrounding the detection device 10) the surrounding environment 147 and may be sent to the database 170 to complete or update the list of known QSL topological signatures.

In an embodiment, the interpreted signatures may be directly outputted using the output signal 149.

Reconstructing the surrounding environment can comprise interpreting the surroundings to determine the possible location, setting and layout of the surroundings based on the information provided by the identification of the objects of the surroundings and possibly on the complementary information/data which may be provided by additional or complementary "standard" detection devices (e.g., camera and image processor).

It will be appreciated that artificial intelligence may be trained and used to optimize and gradually render this reconstruction steps more reliable and accurate.

Once the reconstruction completed, the corresponding information (all of it or a selection) can be transferred to the proper destination (e.g., user interface, database) as the output signal 149.

Exemplary embodiment of the detection device

The following presents one of the many possible configurations that the proposed detection device 10 can have. It will be appreciated that the described embodiments are only a selection of the possible implementation of the proposed device and that the detection device 10 may be used, coupled with, integrated into, added to, connected to and/or used in combination with any suitable device (tools/aid for visually impaired people, mining/oil/mineral exploration devices, quality control devices, solid/liquid/gas analysis devices, etc.).

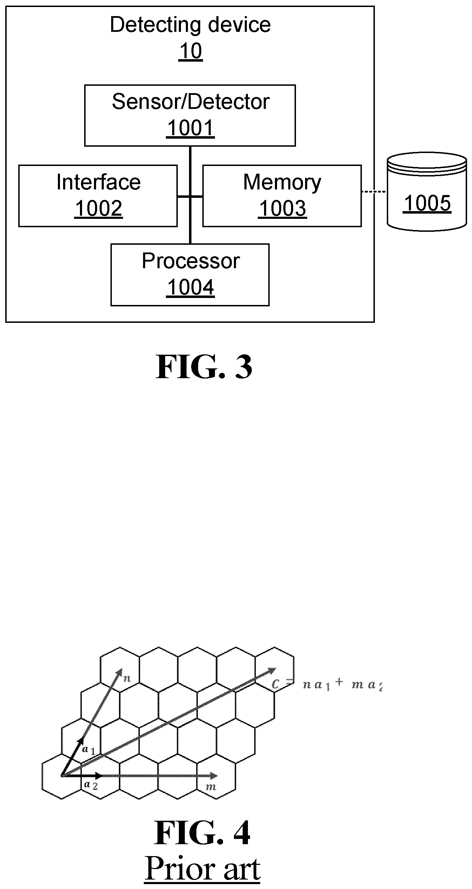

An embodiment of the proposed detection device 10 illustrated at Figure 3 can comprise at least one quantum sensor/detector 1001, an input interface 1002, a memory 1003 and at least one processor 1004. These elements/modules can all be directly and/or indirectly connected and/or coupled with one another. Two or more of these elements can be interconnected via any suitable means known in the art (integrated, cables, internet, ethernet, WiFi, Bluetooth®, etc.). Two or more of these elements can be integrated within a same housing or module.

The sensor/detector 1001 can be any suitable sensor device that enables probing the QIO of the QSL. In an embodiment, the sensor 1001 can be one or more (e.g., matrix or lattice) carbon nanotube (CNT) coupled to at least one NVC of a QSL. In some embodiments, the sensor 1001 can comprise a 2D or 3D matrix of such CNT-NVC couplings.

The interface 1002 of the proposed detection device 10 can be configured to ensure that it can at least receive - from at least one external or complementary device - known QSL topological signatures (e.g., list of objects ↔ signatures). The interface can optionally receive complimentary data. The interface may be used in step 149 to output the useful information. In some embodiment, the interface 1002 can be the user interface.

The memory 1003 of the detection device 10 can be used to save any relevant data (e.g., any data acquired or generated by the processor) and/or to store at least one program code (program instructions and commands) to properly operate the detection device 1000 and/or any other required information. In some embodiments, the memory can be any suitable type of transitory and/or non-transitory memory known in the art, which may be at least one of: random-access memory (RAM), read-only memory (ROM), solid-state drive (SSD), hard disk drive (HDD), a combination thereof, etc. In some embodiments, the memory 1003 can comprise a plurality of memory layers. The memory can optionally store a theoretical computer model of an ideal/theoretical/expected magnetic field of one or more magnetic heads of a medical device.

The processor 1004 of the detection device 10 can comprise one or more central processing units (CPU), one or more graphic processing units (GPU), any suitable general-purpose programmable processing unit known in the art (microprocessor, digital signal processor, etc.) or a combination thereof. The processor 1004 can be configured to receive and perform instructions from the memory 1003. In this example, the processor 1004 is shown as being unitary, but the processor 1004 may also be multicore, or distributed (e.g., a multiprocessor).

It will be appreciated that while the processor 1004 can be used to process any (one or more, or all) of the previously mentioned steps, mathematical operations and data processing that may require processing power. While the processor 1004 can comprise a collection or network of various processors, it may need to have a processing power that varies and that needs to be above a certain threshold. In some embodiments, the processor 1004 can comprise a single or a plurality of state-of-the-art smartphone processor.

It would be possible, in an embodiment, to use more powerful processors 1004 to allow the detection device 10 to recognize, in real time, the QSL topological signature corresponding to more complex objects in order to be added to the signature database 170.

The input interface may be connectable/compatible with a wide variety of apparatuses (illustrated in Figure 3 as a block representing any combination of external, optional and suitable device 1005 configured to exchange data with anyone the interface 1002, memory 1003 and/or the processor 1004 of the detection devices 10), which can be, but is not limited to, one or more of: internet, a database, a memory module, another detection device 10, a computing device, a data processing unit or a remote server. It will be appreciated that the interface can communicate and be connected to such apparatuses using any suitable means known in the art (cables, internet, ethernet, Wi-Fi, Bluetooth®, USB, etc.).

In some embodiments, the interface may comprise an input and/or an output function so as to enable both input and output of information/data. For example, the interface can be used to send input data to the memory 1003 and/or the processor 1004. In some embodiments, the interface can be used to output data from the memory 1003 and/or from the processor 1004, such as a QSL topological signatures outputted by the processor 1004, for example.

It will be appreciated that the signature database 170 can be partially comprised in or comprised entirely in the memory 1003 and the device 1005.

ANNEX: Complementary information, theory, prior art and examples

Topological signatures of quantum fields: In 1988, Edward Witten introduced the concept of topological field theory and its properties (e.g., see Topological quantum field theory by Edward Witten, DOI: 10.1007/BF01223371). This class of quantum field theories is distinguished, therefore, specifically by the fact that their "observables" (values) are topological invariants with respect to any underlying varieties; in other words, the observables depend only on the overall shape of the topological space. In other words, within this topological space, all observable values are invariant for a topological field. What's remarkable, however, is that these observables correspond impeccably to the results previously obtained by a purely mathematical, not physical, approach. Unconventionally, topological field theories take the approach of first determining, by physical means, the observables that can then be exploited by mathematical tools (in particular, the observables of the techniques used in field theory). The point of this approach was to demonstrate how topology (in the sense of the geometric structure of space) can be involved in physical manifestations in field theory. E. Ryder's "Quantum Field Theory" (DOI: 10.1017/CBO9780511813900) provides a more detailed, but still accessible, description of this approach and its conclusive results. The process of transferring topologically protected states has been demonstrated (e.g., see Topologically protected quantum state transfer in a chiral spin liquid by N.Y Yao et al., DOI: 10.1038/ncomms2531). The typical example of QSL, the CSLB (Colloidal Supported Lipid Bilayers) of the Kitaev Model, demonstrates the high level of topological protection that enables it to be transported. As a result, when used appropriately, topology plays a key role in guaranteeing the robustness of physical manifestations in field theory. This means that a QSL topological signature of an object is protected, transferable and invariable.

*Quantum spin liquids* vs *qbits* : Some principles that have been scientifically demonstrated for qbits are also applicable to QSLs. For example, as the person skilled in the art knows, the same precision concerning nanotubes and the same stability concerning electrons and the oscillator, all respecting the same physical laws, can also be applied to the QSL. Therefore, the measurements derived from charges and magnetic moments of the CNT can be used to determine the QSL topological signature of an object, which can be directly integrated into the proposed device. What is known applicable for a single object (e.g., material) may be extended to more complex objects (e.g., alloy, inorganic, organic, and objects made up of multiple materials) via the progressive enrichment of the signature database.

*Example of manufacturing of CNT on a Diamon-NVC QSL:* from the prior art, it is known how to assemble carbon nanotubes precisely on a diamond substrate (see for example, the theses of Fontaine et al., https://hal.science/hal-02324807). One way of achieving this, may be to start by operationally spraying a suitable *negative resin* (spray-coating), for uniform spreading: this can be done to avoid diamond edge deformations and the damaging edge effects induced by traditional spin-coating. Laser photolithography can then be used to engrave the resin surface. In some embodiments, automated or semi-automated photolithography may not be possible on such a small diamond. In some embodiments, manual photolithography processes may generally not achieve a resolution and precision of less than $5\mu m$. On the other hand, laser photolithography with a 2 or 3 $\mu m$ beam has made it possible to achieve the targeted operational functionalities as explained by Fontaine et al.: the laser power, the approach speed and then the scanning speed can be used to optimize production, including appropriate quality assurance. In this way, the diamond may ensure the transmission of high current densities and a high breakdown field (for example, of the order of 10 MV/cm) suitable for the proposed method, device and network. In addition, it can ensure suitable heat dissipation thanks to its high thermal conductivity (e.g., $\lambda\sim20$ $W\cdot cm^{-1}\cdot K^{-1}$).

*CNT vibrational properties:* Placed in this current context, the vibrational properties of carbon nanotubes can be understood to be vibrations of a rolled-up sheet of carbon. Carbon nanotubes have specific properties, both optical and electronic, which are well known by experts in the field of CNT. When electric charges are moved, the magnetic and electric fields vary locally to adjust to the position of the charges: they produce an electromagnetic wave. This wave can usually propagate in all three directions in space. The same can be applied to variations in quantum fields. The wave vector "C" as illustrated in Figure 4, which describes the wave, can be characterized by its amplitude, phase and pulsation. Wave vectors can add up as the number of neighbors increases (see Figure 4). The arrows characterize the different transitions, respectively along the axis of the carbon nanotube and perpendicular to it. Each conduction sub-band has its own angular momentum with its quantum number $i$ and an eigenvalue of the associated Pauli matrix (e.g., see Carbon Nanotube Devices for Quantum Technology by Andre Baydin et al., DOI: 10.3390/ma15041535). The vibrational properties of a carbon nanotube can be easily demonstrated and measured by Raman scattering. As far as electrons are concerned, most of these properties are based on their one-dimensional confinement, represented by the hexagonal bonds of the honeycomb lattice. This is why the Kitaev honeycomb model is now widely used.

*Measuring the CNT vibrations:* Charge and magnetic moment distributions are now classically determined by measuring electric charge density and magnetic moment, as demonstrated by the Weizman Institute in a publication in Nature *(Atomic-like charge qbit in a carbon nanotube enabling electric and magnetic field nano-sensing* by I. Khivrich and S. Ilani, DOI: 10.1038/s41467-020-16001-5). Reliability and stability have thus been demonstrated, making the qbit signature undeniably linked the electrical charge density and magnetic moment. In the present context, the QSL being the element of interest, the signature obtained by measuring the electric charge density and the magnetic moment of the CNT is inextricably linked to the QSL (e.g., the NVC of the QSL). Measurements of the information derived from these oscillations, correlated with the known QSL topological signatures, can be integrated and improved over time to provide the Quantum Information System or device of the present invention.

*Kitaev model:* The Kitaev toroidal code has been extensively tested over the last twenty years, with the aim of detecting errors in a potential quantum computer and correcting them. The very nature of the enormous challenge of achieving this, undoubtedly in the near future, has had the added benefit of extensively testing knowledge of the Kitaev toroidal code. But, unlike the Kitaev code used for the qbits of a quantum computer, in the present invention we can use the toric code in a completely different sense. Indeed, in the case of the present invention, once the topological quantum phases have been measured, the QSL Topological Signatures can be saved in the signature database 170.

*Matrix:* The basis vectors of the associated matrix embody the quantum states. One way to achieve this is to use the general case of the Kitaev model applied to the most general lattices we can encounter ($3\times3$, $4\times4$, $2^n\times2^n$ for $n\geq2$). The resolution of the Kitaev model can prove valid for the most complex of the QIO of a QSL as demonstrated by the Wu et al. in their publication titled Matrix generalization of the Kitaev model (DOI: 10.1103/PhysRevB.79.134427). This publication extends the Kitaev model, defined by Pauli matrices to a topology, but generalized by taking a 4 x 4 matrix as an example. In the appropriate Hilbert space, we demonstrate that the Hamiltonian, integrating all QSL phase links, is expressed in terms of a precisely defined matrix. By reducing the general matrix (which is explicitly detailed with its eigenvalues) to a lattice relative to a diamond, we obtain the matrix of the Hamiltonian for any QSL states (and, of course, the eigenvalues derived from it). In this way, the detection of a material's quantum spin phases is linked to the topological signature of its QSL state's quantum informational oscillations: in other words, from the Directory that (progressively) lists them, a material can be recognized by its signature.

More precisely, it has to be reminded that the matrix comprising the "Kitaev Hamiltonian Operator" is perfectly interfaced with the Pauli matrices. It encompasses them using a trivial classical calculation that allows to pass particle polar coordinates (R, $\theta$, $\Phi$) to its 3-dimensional Cartesian coordinates: according to x, y and z, that are the 3 axes of a direct orthogonal trihedron, in which the z direction is the axis from the center of the NV (NVc) that joins the nitrogen atom to the gap. Therefore, if $S^\wedge = (S^\wedge x, S^\wedge y, S^\wedge z)$ is the electronic spin operator, the interaction is described by the matrix in the {x,y,z} basis linked to the NVc:

$$\begin{pmatrix} S^\wedge xx & S^\wedge xy & S^\wedge xz \\ S^\wedge yx & S^\wedge yy & S^\wedge yz \\ S^\wedge zx & S^\wedge zy & S^\wedge zz \end{pmatrix}$$

In this way, the detection of the quantum spin states of a material, through their vibrations, can be linked to the signature of the quantum information oscillations of this QSL state (i.e., the QSL topological signature). In other words, based on the constantly increasing/updating database of known QSL topological signatures, an object can be recognized by its QSL topological signature.

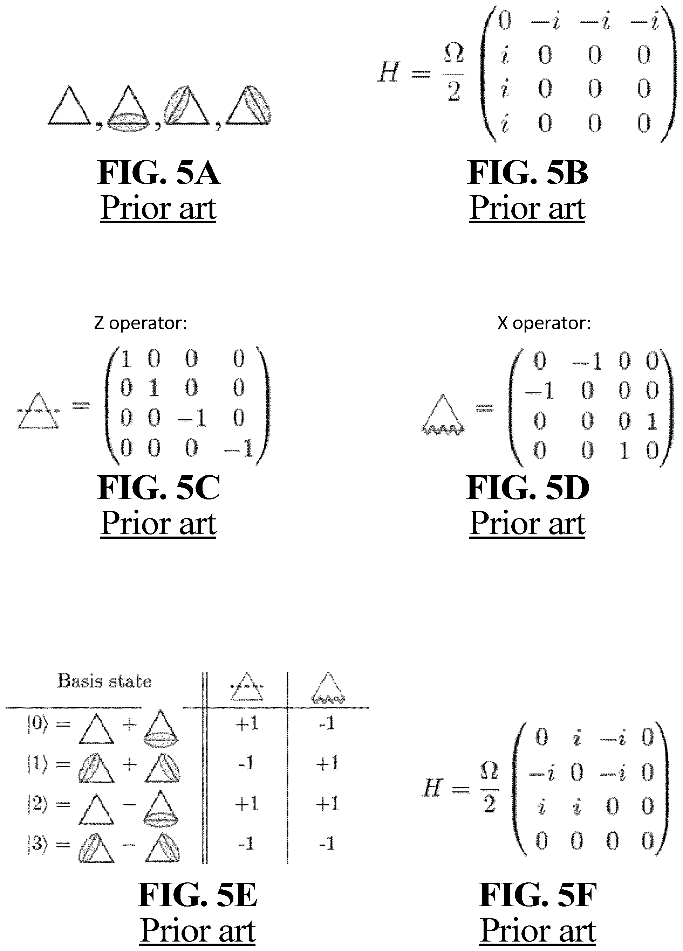

*Resolving simplicial complex:* To use the measured QSL states in the Kitaev matrix elements, the QSL states are tracked by rotating them about three axes X, Y and Z, corresponding respectively to the $S^\wedge x$, $S^\wedge y$, and $S^\wedge z$ of the Kiteav model that can be previously determined. Parity measurements of the X and Z operators are averaged through loops including reflections and rotations. Rotation can then be understood and represented by its action on morphologies of individual triangles whose sides are "blocking". Each triangle can be described as a 4-dimensional system as illustrated in Figure 5A. The strict quench Hamiltonian of inside triangles can be written by the matrix shown in Figure 5B. Thus, we can see that the Z operator, which acts on the two upper sides of the triangle and the X operator acting on the base of the triangle are given by the matrix shown in Figures 5C and 5D respectively, respectively. It will be appreciated that the operators X and Z can be diagonalized by passing through an appropriate symmetric base (see Figure 5E) to obtain the quench Hamiltonian shown in Figure 5F. In this morphological space, we can then identify the presence of QSL states by measuring morphological chain operators, analogous to those of Kitaev's toric model. The relevance of the results obtained in the literature ensures that it is sufficient to consider the evolution of each triangle separately. In the context of the proposed method and devices, the Interaction bonds X, Y, Z (as per the Kitaev Model) that can be extracted from the resulting Hamiltonian can be used as the QSL topological signature. The Z and X operators can be representative of the targeted QSL phase and used for the QSL topological signature. These open strings can be representative of distinctive parameters for QSLs and corresponding materials. The QSL may then be correlated with the material, of which the QSL represents a topological signature.

*Characterization of topological chain operators:* If the electronic structure (number of electrons) of each material in the Mendeleiev Table is different and can be identified from one to the next, the same applies to the QSL states of each of these materials. It is therefore possible, to use Schrödinger's formalism of wave mechanics. Every material (in Mendeleev's table) has an invariant spin. Spin is, therefore, an invariant property of every material. Bonds are represented in 3 dimensions and labeled as -X, -Y and -Z, in accordance with the Heisenberg-Kitaev model illustrated in Figure 1B and as detailed by the paper titled Models and Materials for Generalized Kitaev Magnetism, by Stephen M. Winter et al. (DOI: 10.48550/arXiv.1706.06113).

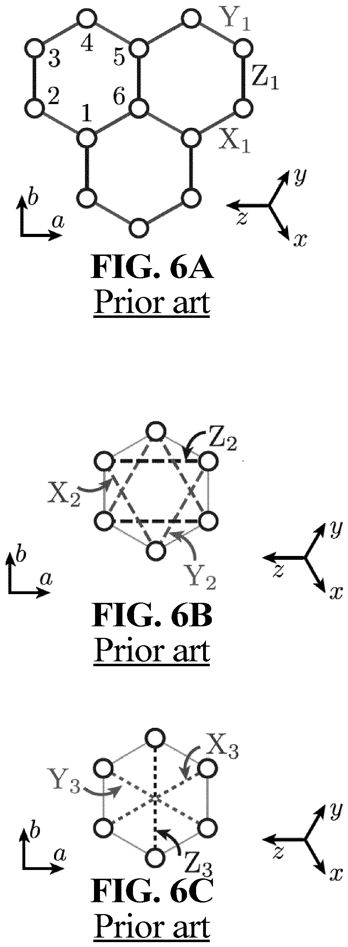

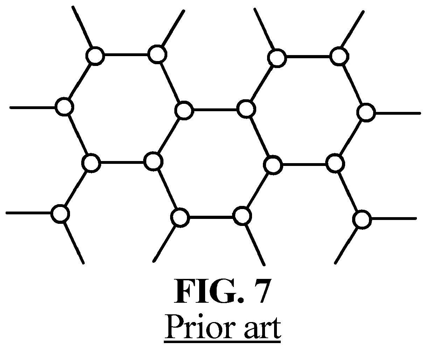

*Stability of the signal:* The stability of this model is one of its key features. Indeed, the topology of the interaction bonds ensures protected, immutable quantum states. In particular, the natural isolation of the QSLs protects them from perturbations coming from their environment and from any disruptive "noise". Nevertheless, the minimization of noise, by means of appropriate filters (e.g., Wiener filter) after linking it to the basis of the Huyghens and Fresnel Principles, when wavefunction deconvolution will be discussed. In this context, stability lends credibility to the quality of the states of each topological operator for a given material. Moreover, it's not just a question of the state of a single link, but in Kitaev's demonstrated model, it's a matter of integrating the accumulation of possible 6-link states in a hexagon. This is because the states accumulate and provide detection: a) by "first neighbors", b) by "second neighbors", but also c) by "third neighbors". Figures 6A, 6B and 6C (presented in *challenges in design of Kitaev materials: Magnetic interactions from competing energy scales* by Stephen M. Winter, Ying Li, Harald O. Jeschke, and Roser Valenti, DOI: 10.1103/PhysRevB.93.214431) respectively show the bond states of first neighbors, second neighbors and third neighbors, where a and b are the crystallographic axes, while x, y and z are the 3D axes of the local octahedron. The various Exact Diagonalization calculations carried out since 2015 all converge on fully consistent results using 16-vertices magnetic models (see Figure 7 showing 18 links connecting these 16 vertices). Already, with such a "definition" based on a 16-vertex model, we can distinguish 18 links endowed with different states (i.e., precisely 418 different QSL states), i.e., over 68 million different QSL cases, discriminating as many possible material signatures to be compared with the first requirement of 118 different QSLs needed to distinguish the 118 materials of the Mendeleiev Table. This means that all 118 materials, or objects made up of a single material (elementary in the Mendeleiev Table), can be identified by different QSL topological signatures to be listed in the signature database 170. It will be appreciated that if two materials were to have distinct QSL topological signatures that were so close as to be misleading, it would suffice to perform the topological calculation for them using more than 16-vertices (e.g., based on a 32-vertex model) in order to integrate them into the signature database 170.

*Devoted amplifier.* If, finally, when the QSL topological signature of a material is detected by a detection device, a signal that is too weak may induce doubt (e.g., signal measurement uncertainties), this doubt can be reduced/removed in real time, by multiplying ("démultiplier") the incident field signal by optionally calling up a "solenoid device" in real time. There may be materials whose signal (e.g., QIO or QSL topological signature) is too weak to be identified and discriminated with sufficient/complete confidence. In such cases, a micro-electromagnet may be installed at the field detection level (e.g., at the acquisition module 120). This micro-electromagnet may only be used in such specific cases of "doubt" (insufficient recognition by the acquisition module 120). Technologically, such solenoid device (e.g.,

coil) can be designed on the principle of a devoted device (e.g., implemented in a computation chip and in the acquisition module 120) based on this relevant devoted amplifier. This function can be used to "trap" and multiply the energy of the field (e.g., QIO) of the QSL to be detected. In some embodiment, the effect obtained may be similar to that of a field with unchanged characteristics, but whose signal may only be increased, possibly becoming much higher than that of the incident field (by at least one order of magnitude). This increased signal may thus, in real time, significantly improve the discrimination of the QSL signature signal. In some embodiments, this field signal amplification device can be an integral part of the present invention. It can be used in contexts other than that of the detection device.

*Decomposition of the global signal into individual signals:* For a complex (multi-material) objects, the wave functions detected can be "decomposed" into elementary functions, in order to identify/match the QSL Topological Signatures of the materials making up the object. It can be useful to decompose the Hamiltonian matrix initially obtained into several matrices. The input to this 132 may be the QSL states of the complex object.

*Additional information on waveforms and object signature recognition:* In classical physics, a particle is described by its position r(t). This position evolves along a trajectory, classically given by Newton's equation $m\frac{d^2 r(t)}{dt^2} = F(r, t)$. In quantum physics, the particle shows a wave aspect. Thus, due to the wave-corpuscle duality, the particle is described by its wave function $\Psi$ (r, t) and the equation that gives its evolution is the Schrödinger equation. Note that $\Psi$ (r, t) and its components are complex numbers.

Huyghens established his fundamental principle, still true and fundamental in quantum physics: "All the points reached at the same time by the wave are the centers of wavelets that reinforce themselves on their common envelope: the main wave. Energy can only be appreciated on this envelope". Here, the concept of wavelets is fundamental, highly illustrative and representative. Fresnel refined Huyghens' principle to suit the wave nature of light (in a "Fresnel Principle"). Although the illustrative term "wavelet" has disappeared, the concept remains: "The vibrations of a luminous wave in each of its points, can be regarded as the resultant of the elementary movements that would be sent there at the same instant, acting in isolation, by all the parts of this wave considered in any one of its previous positions." The key to the calculations involves the wavelets defined by Huyghens.

In some embodiment, instead of detailing the mathematical calculations required to reconstitute the superimposed waves, it is possible to use dedicated programs that have become fairly classic in this field, such as those produced by Gabriel La Frenière 25 years ago, which have since been widely used and improved.

*"Decompose, then Deconvolve" a wave function to find the signature of a known object:* The wave function is a linear superposition of wave functions, each of which is a solution of the Schrödinger equation. It can be calculated by summing up (often called "convolution", by abuse and errors of language) each of the wave functions, i.e., accumulating their superposition. But what we're interested in is the reciprocal: detecting in an accumulation of waves, the signatures that the present invention seeks to detect. So, by reciprocal process, if we receive a "global" wave function and we look for the "unitary" wave functions (known in the Directory) that make it up, there are two ways (and, therefore, two calculations) that are as complementary as they are convergent.

Every cited document, publication and article (e.g., DOI tag) are hereby incorporated by reference.

## Claims

1. A quantum field detection device for identification of quantum informational oscillations of a quantum spin liquid (QSL), the device comprising:

   a body supporting said QSL;
   a quantum informational oscillation sensor for detecting a state of the QSL;
   a processor connected to the sensor and to a memory; and
   the memory storing program code that, when executed by said processor,
   causes said processor to:

   extract quantum informational oscillations from a detection signal of said quantum informational oscillation sensor;
   process said quantum informational oscillations to resolve a simplicial complex to determine Hamiltonian operators of the extracted quantum informational oscillations;
   characterize at least one QSL topological signature of said quantum information oscillations using said Hamiltonian operators; and
   identify at least one object of surroundings of said detection device based on said at least one characterized QSL topological signature and using known QSL topological signatures.

2. The device as defined in claim 1, wherein said characterizing comprises calculating the Hamiltonian tensor operators of the QSL using a Hamiltonian tensor product.

3. The device as defined in claim 1 or 2, wherein said program code, when executed by said processor, further causes said processor to refine said at least one QSL topological signature; and wherein said identifying comprises identify at least one object of surroundings of said detection device based on said at least one refined QSL topological signature and using said known QSL topological signatures.

4. The device as defined in claim 3, wherein said identifying of said object comprises fetching, from a database storing known QSL topological signatures, a least one of said known QSL topological signatures to interpret said characterized quantum informational oscillations.

5. The device as defined in claim 4, further comprising said database.

6. The device as defined in claim 4, wherein said database is a remote database and wherein said program code, when executed by said processor, further cause said processor to send said detected QSL topological signature to said remote database.

7. The device as defined in any one of claims 1 to 6, wherein said characterized quantum informational oscillations are uploaded to a remote processing device, wherein said remote processing device uses a database storing known QSL topological signatures to identify at least one object in said surroundings based on said uploaded characterized quantum informational oscillations.

8. The device as defined in claim 7, wherein said device receives, from said remote processing device, data about said at least one object in said surroundings.

9. The device as defined in any one of claims 1 to 8, further comprising a user interface providing information about said identified at least one object to a user of said detection device.

10. The device as defined in any one of claims 1 to 9, wherein said body supporting said QSL comprises a diamond comprising at least one nitrogen vacancy center (NVC) and wherein said quantum informational oscillation sensor comprises at least one carbon nanotube (CNT) in close proximity to said NVC.

11. The device as defined in claim 10, wherein said diamond comprising a matrix of nitrogen vacancy centers and wherein said quantum informational oscillation sensor comprises a matrix of CNTs, each in close proximity to at least one nitrogen vacancy center of said matrix of nitrogen vacancy centers.

12. The device as defined in claim 10 or 11, wherein said extracting said quantum informational oscillations from a detection signal comprises determining an electric charge density and a magnetic moment of said at least one CNT.

13. The device as defined in any one of claims 10 to 12, wherein said extracting said quantum informational oscillations from a detection signal comprises determining an electric charge density and a magnetic moment of at least one of said matrix of CNTs.

14. The device as defined in any one of claims 1 to 13, wherein said QSL remains a quantum spin liquid when an ambient temperature is between about -40°C to about 45°C.

15. The device as defined in any one of claims 1 to 14, wherein said quantum informational oscillations are processed based on wavefunction-based quantum systems.

16. The device as defined in any one of claims 1 to 15, wherein said quantum informational oscillations are processed based on particle-based quantum systems.

17. A method of identification of quantum informational oscillations of a quantum spin liquid (QSL), the method comprising:

   providing a QSL coupled to a quantum informational oscillation sensor;
   detect the quantum informational oscillation of said QSL using said quantum informational oscillation sensor;
   process said quantum informational oscillations to resolve a simplicial complex to determine Hamiltonian operators of the extracted quantum informational oscillations;
   characterize at least one QSL topological signature of said quantum information oscillations using said Hamiltonian operators; and
   identify at least one object of surroundings of said detection device based on said at least one characterized QSL topological signature and using known QSL topological signatures.

18. The method as defined in claim 17, wherein said characterizing comprises calculating the Hamiltonian tensor operators of the QSL by considering a Hamiltonian tensor product.

19. The method as defined in claim 17 or 18, further comprising refining said at least one QSL topological signature; and wherein said identifying comprises identify at least one object of surroundings of said detection device based on said at least one refined QSL topological signature and using said known QSL topological signatures.

20. The method as defined in any one of claims 17 to 19, wherein said QSL comprises a diamond having at least one nitrogen vacancy center (NVC); wherein said quantum informational oscillation sensor comprises at least one carbon nanotube in close proximity to one of said at least one NVC; and wherein said detecting of said quantum informational oscillation of said QSL comprises determining an electric charge density and a magnetic moment of said at least one CNT.

21. The method as defined in any one of claims 17 to 20, further comprising fetching at least one known QSL topological signature from a signature database.

22. A QSL topological signature network for identification of quantum informational oscillations of a quantum spin liquid (QSL), the network comprising:

   a plurality of quantum field detection devices as defined in any one of claims 1 to 16;
   a database storing known QSL topological signatures;
   wherein each of said database and said plurality of quantum field detection devices comprises a compatible communication mean for exchanging data at least between said database and each one of said plurality of quantum field detection devices; and
   wherein said database receives and stores QSL topological signatures detected and **characterized by** said plurality of quantum field detection devices.

23. The network as defined in claim 22, wherein said communication mean comprises a receiving and transmitting antenna.

**FIG. 1A**
Prior art

**FIG. 1B**
Prior art

100 ⌇ ┌┈┈┈┈┈┈┈┈┈┈┈┈┈┈┈┈┈┈┈┈┈┐
        ┊ Object(s)/Environment ┊
        └┈┈┈┈┈┈┈┈┈┈┈┈┈┈┈┈┈┈┈┈┈┘

                            ↘ 10

110 ⌇ ┌─────────────────────┐
        │ Quantum Spin Liquid (QSL) │
        └─────────────────────┘

120 ⌇ ┌─────────────────────┐
        │      Acquisition      │
        └─────────────────────┘

130 ⌇ ┌─────────────────────┐
        │     Identification     │
        └─────────────────────┘
                                        171

140 ⌇ ┌─────────────────────┐        ┌──────────┐
        │     Interpretation     │ ◄──────│ Signature │ ⌇ 170
        │                      │ ──────►│ Database  │
        └─────────────────────┘        └──────────┘
                                        172

150 ⌇ ┌┈┈┈┈┈┈┈┈┈┈┈┈┈┈┈┈┈┈┈┈┈┐
        ┊     Communication     ┊
        └┈┈┈┈┈┈┈┈┈┈┈┈┈┈┈┈┈┈┈┈┈┘
                                                              180

160 ⌇ ┌┈┈┈┈┈┈┈┈┈┈┈┈┈┈┈┈┈┐  ┌┈┈┈┈┈┈┈┈┈┈┈┈┈┈┐
        ┊        User        ┊  ┊ External systems ┊
        └┈┈┈┈┈┈┈┈┈┈┈┈┈┈┈┈┈┘  └┈┈┈┈┈┈┈┈┈┈┈┈┈┈┘

# FIG. 2A

130

131 ⌇ ┌─────────────────────────┐        ┌──────────┐
        │ Resolving simplicial complex │ ◄──────│  Input   │
        └─────────────────────────┘        │   129    │
                                            └──────────┘
132 ⌇ ┌─────────────────────────┐
        │     Characterization of     │
        │  topological chain operators │
        └─────────────────────────┘

133 ⌇ ┌┈┈┈┈┈┈┈┈┈┈┈┈┈┈┈┈┈┈┈┈┈┈┈┈┈┐        ┌──────────┐
        ┊    Calculation of the QSL's   ┊ ──────►│  Output  │
        ┊      Tensor Operators      ┊        │   139    │
        └┈┈┈┈┈┈┈┈┈┈┈┈┈┈┈┈┈┈┈┈┈┈┈┈┈┘        └──────────┘

# FIG. 2B

**FIG. 2C**

Detecting device
10

Sensor/Detector
1001

Interface
1002

Memory
1003

1005

Processor
1004

## FIG. 3

$$c = na_1 + ma_2$$

## FIG. 4
## Prior art

$$H = \frac{\Omega}{2} \begin{pmatrix} 0 & -i & -i & -i \\ i & 0 & 0 & 0 \\ i & 0 & 0 & 0 \\ i & 0 & 0 & 0 \end{pmatrix}$$

**FIG. 5A**
Prior art

**FIG. 5B**
Prior art

Z operator:

$$= \begin{pmatrix} 1 & 0 & 0 & 0 \\ 0 & 1 & 0 & 0 \\ 0 & 0 & -1 & 0 \\ 0 & 0 & 0 & -1 \end{pmatrix}$$

**FIG. 5C**
Prior art

X operator:

$$= \begin{pmatrix} 0 & -1 & 0 & 0 \\ -1 & 0 & 0 & 0 \\ 0 & 0 & 0 & 1 \\ 0 & 0 & 1 & 0 \end{pmatrix}$$

**FIG. 5D**
Prior art

| Basis state | | |
|---|---|---|
| $|0\rangle = $ △ $+$ | +1 | -1 |
| $|1\rangle = $ ▨ $+$ | -1 | +1 |
| $|2\rangle = $ △ $-$ | +1 | +1 |
| $|3\rangle = $ ▨ $-$ | -1 | -1 |

**FIG. 5E**
Prior art

$$H = \frac{\Omega}{2} \begin{pmatrix} 0 & i & -i & 0 \\ -i & 0 & -i & 0 \\ i & i & 0 & 0 \\ 0 & 0 & 0 & 0 \end{pmatrix}$$

**FIG. 5F**
Prior art

**FIG. 6A**
Prior art

**FIG. 6B**
Prior art

**FIG. 6C**
Prior art

## FIG. 7
## Prior art

Europäisches Patentamt

European Patent Office

Office européen des brevets

## EUROPEAN SEARCH REPORT

**Application Number**

EP 24 30 5017

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHATUA J ET AL: "Experimental signatures of quantum and topological states in frustrated magnetism", ARXIV.ORG, CORNELL UNIVERSITY LIBRARY, 201 OLIN LIBRARY CORNELL UNIVERSITY ITHACA, NY 14853, 23 October 2023 (2023-10-23), XP091647088, DOI: 10.1016/J.PHYSREP.2023.09.008 * page 2 - page 20; figures 3,5,9,11,18,26 * | 1-23 | INV. G06N10/40 H01F1/00 |
| A | ALEXEI TSVELIK: "Quasiparticle Signatures in Quantum Spin Liquids", PHYSICS, vol. 7, 21 May 2014 (2014-05-21), XP093167785, United States ISSN: 1943-2879, DOI: 10.1103/Physics.7.54 * page 1 * | 1-23 | |
| A | PENG-BO LI: "Hybrid Quantum Device with Nitrogen-Vacancy Centers in Diamond Coupled to Carbon Nanotubes", PHYSICAL REVIEW LETTERS, vol. 117, no. 1, 30 June 2016 (2016-06-30), XP093168036, US ISSN: 0031-9007, DOI: 10.1103/PhysRevLett.117.015502 * page 1 * | 10-13,20 | **TECHNICAL FIELDS SEARCHED (IPC)** G06N H01F |

The present search report has been drawn up for all claims

| Place of search | Date of completion of the search | Examiner |
|---|---|---|
| The Hague | 29 May 2024 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. LOPES et al.** *Atomic Hong-Ou-Mandel experiment*
- **C. BROHOLM et al.** *Quantum spin liquids*
- **ANDREY BAYDIN et al.** *Carbon Nanotube Devices for Quantum Technology*
- **HIDENORI TAKAGI et al.** *Concept and realization of Kitaev quantum spin liquids*
- **PENG-BO LI et al.** *Hybrid Quantum Device with Nitrogen-Vacancy Centers in Diamond Coupled to Carbon Nanotubes*
- **LI et al.** *Hybrid quantum device with NV centers in diamond coupled to carbon nanotubes*
- **JUNWEI YANG et al.** *Comparison of carbon nanotube forest growth using AlSi, TiSiN, and TiN as conductive catalyst supports*
- **PETER ATKINS** ; **JULIO DE PAULA** ; **JAMES KEELER**. *Atkins physical chemistry*
- **JOSHUA K. HAMILTON** ; **IAN R. HOOPER** ; **CHRISTOPHER R. LAWRENCE**. *Absorption modes of Möbius strip Resonators*
- **EDWARD WITTEN**. *Topological signatures of quantum fields*, 1988
- **EDWARD WITTEN**. *Topological quantum field theory*
- **E. RYDER**. *Quantum Field Theory*
- **N.Y YAO et al.** *Topologically protected quantum state transfer in a chiral spin liquid*
- **ANDRE BAYDIN et al.** *Carbon Nanotube Devices for Quantum Technology*
- **WU et al.** *Matrix generalization of the Kitaev mode*
- **STEPHEN M. WINTER et al.** *Models and Materials for Generalized Kitaev Magnetism*